# EUROPÄISCHE PATENTANMELDUNG

(11) **EP 4 310 744 A1**
(43) Veröffentlichungstag der Anmeldung: **24.01.2024**
(21) Anmeldenummer: 23170570.8
(22) Anmeldetag: 28.04.2023
(51) Int. Cl.: G06Q 10/04, A01B 79/00, G06Q 50/02

(54) **ASSISTENZSYSTEM ZUR ERNTEUNTERSTÜTZUNG**

(30) Priorität: 18.07.2022 DE 102022117927
(71) Anmelder: CLAAS Selbstfahrende Erntemaschinen GmbH, 33428 Harsewinkel (DE)
(72) Erfinder: Bormann, Bastian, 33334 Gütersloh (DE); Wilken, Andreas, 49143 Bissendorf (DE); Baumgarten, Joachim, 48361 Beelen (DE); Neitemeier, Dennis, 59510 Lippetal (DE); Apke, Christoph, 33659 Bielefeld (DE); Rademacher, Thomas, 55425 Waldalgesheim (DE); Stiegemann, Joachim, 33619 Bielefeld (DE)
(74) Vertreter: CLAAS Gruppe

(57) **Zusammenfassung**

Die vorliegende Erfindung betrifft ein Assistenzsystem (1) zur Ernteunterstützung einer Bearbeitung zumindest eines landwirtschaftlichen Feldes (F), wobei das Assistenzsystem (1) eine Datenbank (2) und eine Prognoseeinheit (3) aufweist, wobei die Datenbank (2) sowohl historische Erntedaten (4), aktuelle Erntedaten (5) und erwartete Erntedaten (6) des zumindest einen landwirtschaftlichen Feldes (F) als auch Maschinendaten (7) wenigstens einer Erntemaschine (11, 17) umfasst, wobei die Prognoseeinheit (3) auf Grundlage einer Planungsvorgabe (8) und in abhängig von den in der Datenbank (2) hinterlegten Erntedaten (4, 5, 6) und Maschinendaten (7) anhand eines Prognosemodells (9) eine Ernteprognose erstellt, welche den voraussichtlichen Bedarf von Maschinenressourcen zur Durchführung der Ernte auf dem zumindest einen Feld (F) entsprechend der Planungsvorgabe (8) abbildet, wobei das Assistenzsystem (1) auf Basis der in der Datenbank (2) hinterlegten Erntedaten (4, 5, 6) und Maschinendaten (7) Optimierungskriterien benennt, und dass die Prognoseeinheit (3) anhand eines vorgegebenen Optimierungskriteriums eine Maschineneinstellung (12) für eine Erntemaschine (11, 17) ermittelt und einer Erntemaschine (11, 17) zuordnet, welche in den Maschinendaten (7) als verfügbar benannt ist.

## Beschreibung

Die vorliegende Erfindung betrifft ein Assistenzsystem zur Ernteunterstützung einer Bearbeitung zumindest eines landwirtschaftlichen Feldes gemäß dem Oberbegriff des Anspruches 1 sowie ein Verfahren zur Ernteunterstützung einer Bearbeitung zumindest eines landwirtschaftlichen Feldes mittels eines Assistenzsystems gemäß dem Oberbegriff des Anspruches 15.

In der modernen Landwirtschaft ist eine Vielzahl von Entscheidungen durch den Landwirt zu treffen, welche Einfluss sowohl auf das ökonomische Ergebnis einer Ernte als auch ökologische Auswirkungen haben.

Ein Assistenzsystem, welches der vereinfachten Bereitstellung von Ressourcen zur Durchführung von landwirtschaftlichen Aktionen dient, ist aus der DE 10 2019 130 270 A1 bekannt. Das dort beschriebene Assistenzsystem dient der Ermittlung einer Ressourcenprognose für ein landwirtschaftliches Feld, wobei auf Basis der Ressourcenprognose mittels Ressourcendaten die Verfügbarkeit und Geeignetheit von Ressourceneinheiten bestimmt wird.

Neben der Ressourcenplanung bei der Bearbeitung eines Feldes bedarf es darüberhinausgehender Unterstützung beim Einsatz von Erntemaschinen, um diese unter ökonomischen und ökologischen Gesichtspunkten optimal und effizient einsetzen zu können.

Ausgehend vom vorstehend genannten Stand der Technik liegt der Erfindung die Aufgabe zugrunde, ein Assistenzsystem der eingangs genannten Art weiterzubilden, welches sich durch eine erweiterte Ernteunterstützung bei der Bearbeitung zumindest eines landwirtschaftlichen Feldes auszeichnet.

Diese Aufgabe wird bei einem Assistenzsystem gemäß dem Oberbegriff von Anspruch 1 durch die Merkmale des kennzeichnenden Teils von Anspruch 1 gelöst. Vorteilhafte Weiterbildungen sind Gegenstand der von Anspruch 1 abhängigen Ansprüche.

Gemäß dem Anspruch 1 wird ein Assistenzsystem zur Ernteunterstützung einer Bearbeitung zumindest eines landwirtschaftlichen Feldes vorgeschlagen, wobei das Assistenzsystem eine Datenbank und eine Prognoseeinheit aufweist, wobei die Datenbank sowohl historische Erntedaten, aktuelle Erntedaten und erwartete Erntedaten des zumindest einen landwirtschaftlichen Feldes als auch Maschinendaten wenigstens einer Erntemaschine umfasst, wobei die Prognoseeinheit auf Grundlage einer Planungsvorgabe und in abhängig von den in der Datenbank hinterlegten Erntedaten und Maschinendaten anhand eines Prognosemodells eine Ernteprognose erstellt, welche den voraussichtlichen Bedarf von Maschinenressourcen zur Durchführung der Ernte auf dem zumindest einen Feld entsprechend der Planungsvorgabe abbildet. Erfindungsgemäß ist vorgesehen, dass das Assistenzsystem auf Basis der in der Datenbank hinterlegten Erntedaten und Maschinendaten Optimierungskriterien benennt, und dass die Prognoseeinheit anhand eines vorgegebenen Optimierungskriteriums eine Maschineneinstellung für eine Erntemaschine ermittelt und einer Erntemaschine zuordnet, welche in den Maschinendaten als verfügbar benannt ist.

Der Benutzer des erfindungsgemäßen Assistenzsystems soll bei der Vorbereitung und Durchführung der Ernte vollumfänglich unterstützt werden, indem unter Berücksichtigung von Erntedaten und Maschinendaten Maschineeinstelldaten zur Maschineneinstellung prognostiziert werden, um dem Benutzer in unterschiedlichen Erntesituationen Optimierungsvorschläge zu unterbreiten, die von der bzw. durch die Erntemaschine umsetzbar sind. Wesentlich ist dabei, dass das Assistenzsystem ökonomische Zusammenhänge im Kontext mit dem Einsatz von Erntemaschinen zur Durchführung von Erntekampagnen berücksichtigt, um den Benutzer bei ernterelevanten Entscheidungen zu unterstützen.

Dabei kann das Assistenzsystem zur Eingabe der Planungsvorgabe durch einen Benutzer und/oder zur selbsttätigen Ermittlung der Planungsvorgabe eingerichtet sein. Das Assistenzsystem kann dazu eingerichtet sein, dem Benutzer bei der Eingabe und/oder Erstellung der Planungsvorgabe zu assistieren. Ebenso kann in einer Ausgestaltung die Planungsvorgabe zumindest teilweise selbsttätig von dem Assistenzsystem ermittelt werden, unter anderem auf Grundlage der Erntedaten und der Maschinendaten.

Insbesondere kann die von der Prognoseeinheit erstellte Ernteprognose eine Ertragsprognose eines Feldbestandes des zumindest einen Feldes basierend auf den Erntedaten umfassen und das Optimierungskriterium die Ertragsprognose betreffen. Die Ermittlung der Maschineneinstellung für die Erntemaschine wird somit anhand der Ertragsprognose des Feldbestandes durchgeführt. Dabei kann die Ertragsprognose des Feldbestandes auch während der Bearbeitung des Feldes angepasst werden. Eine solche Anpassung der Ertragsprognose kann sich entsprechend auf die Ermittlung der Maschineneinstellung auswirken, welche dadurch eine Aktualisierung erfährt.

Bevorzugt kann die Prognoseeinheit zumindest auf der Basis von Erntegutart, Erntemaschinentyp, Qualitätsparametern und Feuchtigkeit eine Bewertungsgrößen-Durchsatz-Funktion der Erntemaschine bestimmen. Die Bewertungsgrößen-Durchsatz-Funktion kann eine Durchsatz-Verlust-Kennlinie oder eine Durchsatz-Erntequalitätskennlinie sein. Die Durchsatz-Verlust-Kennlinie als Bewertungsgrößen-Durchsatz-Funktion bildet den Zusammenhang zwischen Durchsatz und auftretende Erntegutverluste gegenüber, während die Durchsatz-Erntequalitätskennlinie als Bewertungsgrößen-Durchsatz-Funktion den Zusammenhang zwischen dem Durchsatz und zumindest einem Qualitätsparameter des Erntegutes abbildet. Neben der Erntegutart, aus welcher weitere erntegutartspezifische Parameter resultieren, beispielsweise das Korn-Stroh-Verhältnis, hat der Erntemaschinentyp Einfluss auf die Bestimmung der Bewertungsgrößen-Durchsatz-Funktion. So können Erntemaschinen einer Gattung unterschiedliche Leistungsmerkmale aufweisen, welche den Durchsatz beeinflussen. Lediglich exemplarisch sei auf die verfügbare Antriebsleistung oder die Arbeitsbreite als mögliche Leistungsmerkmale hingewiesen. Qualitätsparameter können beispielsweise Bruchkornanteil, Sauberkeit des Erntegutes oder die Strohqualität sein.

Dabei kann die Prognoseeinheit eine aktuelle Bewertungsgrößen-Durchsatz-Funktion, insbesondere eine aktuelle Durchsatz-Verlust-Kennlinie, berechnen und zumindest eine erwartete Bewertungsgrößen-Durchsatz-Funktion, insbesondere eine erwartete Durchsatz-Verlust-Kennlinie, der Erntemaschine simulieren. In Abhängigkeit vom Zeitpunkt der Bestimmung einer Bewertungsgrößen-Durchsatz-Funktion, vor Erntebeginn oder während des Erntevorgangs, kann nur eine Simulation der erwarteten Bewertungsgrößen-Durchsatz-Funktion zur Verfügung stehen oder zusätzlich die durch Sensoreinrichtungen an der Erntemaschine bestimmte aktuelle Bewertungsgrößen-Durchsatz-Funktion, welche den Zeitraum ab dem Erntebeginn abdeckt. Insbesondere während des Erntevorgangs dient die Simulation weiterer erwarteter Bewertungsgrößen-Durchsatz-Funktionen dazu, den Einfluss von sich ändernden Randbedingungen während des Erntevorgangs zu bestimmen, um in Abhängigkeit davon geeignete Maschineneinstellungen respektive Maschineneinstelldaten zu bestimmen, welche prognostizierte Abweichungen zwischen der aktuellen Bewertungsgrößen-Durchsatz-Funktion und der erwarteten Bewertungsgrößen-Durchsatz-Funktion kompensieren zu können.

Weiter bevorzugt kann die Prognoseeinheit einen mittleren Durchsatz der Erntemaschine auf der Basis von Logistikdaten, Felddaten, Fahrgeschwindigkeitsdaten und Betriebsdaten der Erntemaschine sowie Daten zur Durchführung von Wartungsarbeiten bestimmen. Unter dem Begriff "mittlerer Durchsatz" ist der erzielte Durchsatz der Erntemaschine über einen Zeitraum zu verstehen, welcher zumindest einen Erntetag bis hin zu einer vollständigen Erntekampagne umfassen kann.

Während die jeweilige Bewertungsgrößen-Durchsatz-Funktion den unmittelbaren Einfluss der das Feld bearbeitenden Erntemaschine auf den erzielbaren Ertrag des Feldbestandes widerspiegelt, berücksichtigt die Prognoseeinheit anhand von Logistikdaten, Felddaten, Daten zur Durchführung von Wartungsarbeiten sowie Fahrgeschwindigkeitsdaten und Betriebsdaten der Erntemaschine den Einfluss auf den mittleren Durchsatz. Dabei werden externe Einflüsse berücksichtigt, die sich nicht unmittelbar aus dem Betrieb der Erntemaschine ergeben müssen, diesen jedoch ebenso beeinflussen wie die Fahrgeschwindigkeitsdaten der Erntemaschine und die Betriebsdaten. Zu den externen Einflüssen zählen die Logistikdaten, die neben Anfahrt und Abfahrt der Erntemaschine zum und vom zu bearbeitenden Feld auch eine Abfahrlogistik, beispielsweise durch Transportwagen oder Unterstützungsfahrzeuge mit Hilfsstoffen und/oder Betriebsstoffen, umfassen. Ein weiterer externer Einfluss ist die Durchführung von Wartungsarbeiten an der Erntemaschine während der Erntezeit, soweit davon die Ersatzteilbeschaffung und/oder die Verfügbarkeit von Wartungspersonal umfasst ist. Felddaten berücksichtigen neben der Befahrbarkeit des Feldbodens, beispielsweise aufgrund von Witterungseinflüssen, die Länge von Anfahrtswegen zum Feld, die geografische Lage des Feldes. Weiter können Felddaten das Auftreten von Lagergetreide, die Strohzähigkeit, die Bestandhöhe oder die Bestanddichte betreffen. Betriebsdaten der Erntemaschine betreffen insbesondere Einstellungen von Arbeitsaggregaten der Erntemaschine, welche sich unmittelbar auf den Durchsatz an verarbeitetem Erntegut auswirken. Beispielsweise beeinflusst bei einer als Mähdrescher ausgeführten Erntemaschine die Höheneinstellung des Vorsatzgerätes die Menge an aufgenommenen Erntegut. Je geringer die verbleibende Stoppelhöhe auf dem Feld, desto mehr Erntegut in Form von Korn und Nichtkornbestandteilen, muss von der Erntemaschine verarbeitet werden, was wiederum die Auslastung des Antriebsmotors der Erntemaschine beeinflusst. Die Situation des Auftretens von Lagergetreide führt unter anderem zu einer signifikanten Reduzierung der Fahrgeschwindigkeit. Zudem werden in der Regel für die Dauer der Bearbeitung von Lagergetreide weitere Einstellungen von Arbeitsaggregaten der Erntemaschine angepasst.

Dabei kann die Prognoseeinheit einen mittleren Durchsatz berechnen und einen erwarteten mittleren Durchsatz simulieren. Hierbei wird der mittlere Durchsatz anhand historischer, d.h. in der Vergangenheit liegender, Daten berechnet. Historische Daten sind entsprechend bereits Daten vom Vortag oder ältere Daten, beispielsweise einer vorangegangenen Ernteperiode, wenn diese dasselbe Feld und dieselbe Erntemaschine betreffen.

Gemäß einer bevorzugten Weiterbildung kann das Assistenzsystem zur Visualisierung von durch die Prognoseeinheit und/oder dem Assistenzsystem bestimmten Parametern eingerichtet sein. Hierdurch können dem Benutzer des Assistenzsystems wesentliche Parameter zur Beurteilung der Erntesituation bereitgestellt werden. Dabei kann anhand der Visualisierung durch das Assistenzsystem auch ein Zusammenhang erläutert werden, welcher die Prognoseeinheit veranlasst, anhand des vorgegebenen Optimierungskriteriums eine Maschineneinstellung für eine Erntemaschine zu ermitteln und einer Erntemaschine zuzuordnen.

So kann das Assistenzsystem als Parameter einen Status und/oder einen Fortschritt einer Erntekampagne visualisieren. Hierzu kann die Darstellung des Standes der Abarbeitung eines Feldes in Echtzeit pro Frucht gehören. Dem kann eine Darstellung des historischen Erntezeitraums der Abarbeitung des entsprechenden Feldes pro Frucht gegenübergestellt werden.

Des Weiteren kann das Assistenzsystem als Parameter aus dem Status und/oder dem Fortschritt einer Erntekampagne eine Folgeplanung, insbesondere eine Tagesplanung, ableiten und visualisieren. Dabei kann es sich um eine von der Prognoseeinheit prognostizierte Tagesplanung handeln, welche unter einer kurzfristigen Prämisse eines Tageszieles, beispielsweise der zu bearbeitenden Fläche, abgeleitet wird. Ebenso kann es sich um eine von dem Assistenzsystem anhand der in der Datenbank hinterlegten historischen Erntedaten und Maschinendaten erstellten Tagesplanung handeln. Insbesondere ermöglicht die Visualisierung der Folgeplanung eine rückschauende Gegenüberstellung der erstellten und der prognostizierten Folgeplanung, insbesondere Tagesplanung.

Bevorzugt kann das Assistenzsystem als Parameter die aktuelle Durchsatz-Verlust-Kennlinie und eine erwartete Durchsatz-Verlust-Kennlinie und/oder ein Verlauf des mittleren Durchsatzes und ein Verlauf des erwarteten mittleren Durchsatzes visualisieren. Diese Visualisierungen dienen der Unterstützung bei der Beurteilung einer aktuellen Betriebssituation durch den Benutzer des Assistenzsystems sowie zur Darstellung von Erläuterungen und zur Veranschaulichung von Maßnahmen, die von der Prognoseeinheit des Assistenzsystems evaluiert werden können, um auf eine geänderte Betriebssituation reagieren zu können, die zu einer Abweichung von der erwarteten Durchsatz-Verlust-Kennlinie und/oder von dem Verlauf der erwarteten mittleren Durchsatz geführt hat.

Gemäß einer Weiterbildung kann die Prognoseeinheit anhand der Erntedaten und Maschinendaten Einzelwerte prognostizieren und visualisieren. Prognostizierte Einzelwerte können Kornfeuchte, Abreife, Ertrag, Bodenbeschaffenheit, Erntezeitbedarf und dergleichen mehr sein.

Insbesondere kann das Assistenzsystem unter Berücksichtigung der durch die Prognoseeinheit erstellten Ernteprognose interaktiv Handlungsempfehlungen generieren. Das Assistenzsystem kann dem Benutzer unter Berücksichtigung der Erntedaten und Maschinendaten sowie der Tagesplanung individuell angepasste Handlungsempfehlungen zur Verfügung stellen, um ein Ertragsziel gemäß der Tagesplanung, unter den aktuellen Voraussetzungen, zumindest zu erreichen oder zu übererfüllen. Dabei können die Handlungsempfehlungen unmittelbar Einstellungen der auf dem Feld aktiven Erntemaschine betreffen sowie eine Modifizierung der Tagesplanung. Beispielhaft für eine Modifizierung der Tagesplanung ist die Handlungsempfehlung, Kosten für die Trocknung in Kauf zu nehmen, um das Ertragsziel unter den vorherrschenden Rahmenbedingungen zu erreichen.

Bevorzugt können historische Erntedaten, aktuelle Erntedaten sowie Maschinendaten durch Sensoreinrichtungen zumindest einer Erntemaschine und/oder von externen Datenquellen ermittelt und/oder bereitgestellt werden. Diese Informationen werden der Datenbank des Assistenzsystems kontinuierlich zugeführt, um die aus einer Erntekampagnenplanung abgeleitete Tagesplanung fortlaufend zu aktualisieren.

Nach einer weiteren Lehre gemäß Anspruch 15, der eigenständige Bedeutung zukommt, wird ein Verfahren zur Ernteunterstützung einer Bearbeitung zumindest eines landwirtschaftlichen Feldes mittels eines Assistenzsystems, insbesondere mittels eines vorschlagsgemäßen Assistenzsystems, beansprucht. Auf alle Ausführungen zu dem vorschlagsgemäßen Assistenzsystem darf verwiesen werden.

Die vorliegende Erfindung wird nachstehend anhand eines in den Zeichnungen dargestellten Ausführungsbeispieles näher erläutert.

Es zeigen:
- Fig. 1: eine schematische Darstellung eines vorschlagsgemäßen Assistenzsystems;
- Fig. 2: eine schematische Darstellung einer von dem Assistenzsystem prognostizierten Tagesplanung;
- Fig. 3: ein Diagramm der prognostizierten Tagesplanung gemäß Fig. 2; und
- Fig. 4: ein Flussdiagramm, welches einen Ablauf zur Berechnung von Beginn und Ende eines Druschprozesses durch das Assistenzsystem zeigt.

Die Erfindung betrifft ein Assistenzsystem 1 zur Ernteunterstützung einer Bearbeitung zumindest eines landwirtschaftlichen Feldes F. Bei dem Assistenzsystem 1 kann es sich beispielsweise um ein rechnergestütztes System handeln wie ein System aus zumindest einem Server und/oder Clients. Die Clients können bevorzugt als mobile Datenverarbeitungsgeräte ausgeführt sein.

Das Assistenzsystem 1 weist eine Datenbank 2 auf, welche auf einem nichtflüchtigen Speicher des Assistenzsystems 1 hinterlegt ist. Das Assistenzsystem 1 weist weiter eine Prognoseeinheit 3 auf, welche zur Erstellung einer im Folgenden noch weiter erläuterten Ernteprognose des zumindest einen landwirtschaftlichen Felds F eingerichtet ist. Die Prognoseeinheit 3 weist hier und vorzugsweise einen Speicher mit Programmanweisungen und mindestens einen Prozessor zum Ausführen der Programmanweisungen auf, wobei der Speicher und die Programmanweisungen eingerichtet sind, gemeinsam mit dem Prozessor die Ernteprognose zu erstellen.

Die Datenbank 2 umfasst historische Erntedaten 4, aktuelle Erntedaten 5 und erwartete Erntedaten 6 des zumindest einen landwirtschaftlichen Feldes F sowie Maschinendaten 7 wenigstens einer Erntemaschine 11. Bei den historischen Erntedaten 4 handelt es sich allgemein um in vergangenen landwirtschaftlichen Perioden erfasste Erntedaten, welche insbesondere von dem Assistenzsystem 1 in der Datenbank 2 hinterlegt werden. Die vergangenen Perioden beziehen sich dabei insbesondere auf Ernteperioden, können aber auch andere an landwirtschaftlichen Zyklen orientierte Perioden betreffen. Die aktuellen Erntedaten 5 betreffen entsprechend Erntedaten der aktuellen landwirtschaftlichen Periode. Bei den erwarteten Erntedaten 6 kann es sich um eine Prognose für den zukünftigen Verlauf von Erntedaten 6 handeln, welche von dem Assistenzsystem 1 erzeugt und/oder von zumindest einem externen System 14 bereitgestellt werden.

Die jeweiligen Erntedaten 4, 5, 6 umfassen hierbei Daten, welche repräsentativ für das auf dem jeweiligen Feld F angebaute Erntegut, die Bearbeitung des Feldes F, beispielsweise konventionell oder ökologisch, und die damit erwirtschafteten Erträge sind. Von den Erntedaten 4, 5, 6 umfasst sind dabei Daten, die Einfluss auf den Ablauf einer Anbau-, Wachstums- und Erntephase umfassenden landwirtschaftlichen Prozesses und des daraus resultierenden Ernteergebnisses haben, beginnend mit der Auswahl einer anzubauenden Erntegutart auf dem Feld F bis zum Abschluss eines Ernteprozesses und dem Verkauf des Erntegutes. Beispielhaft und nicht abschließend sind als auf das Ernteergebnis einwirkende Einflussgrößen Anbauzeiten, Erntezeiträume, Erntegutfeuchtigkeit, Abreife, Bodenbeschaffenheit, Erntezeitbedarf, Wetterdaten, Hilfsmittel- und Betriebsmittelaufwendungen, geografische Lage des Feldes F zu nennen.

Die Maschinendaten 7 umfassen Daten, welche für die eingesetzten bzw. einzusetzenden Erntemaschinen repräsentativ sind, die innerhalb vergangener Ernteperioden sowie für eine geplante Ernteperiode zum Einsatz kommen können. Dazu zählt unter anderem deren Verfügbarkeit.

Unter Hilfs- und Betriebsmitteln 10 werden Ressourcen verstanden, welche eine direkte Auswirkung auf den Ertrag des Feldes F haben. Hierunter fallen unter anderem Saatgut sowie Wirkstoffe, welche auf das Feld F angewendet und insbesondere auf die Früchte und/oder den Boden aufgebracht und/oder eingebracht werden, beispielsweise Düngemittel, Wachstumsregulatoren, Erntehilfsmittel, Fungizide, Pestizide, Herbizide oder dergleichen. Unter den Betriebsmitteln werden Ressourcen verstanden, welche den Prozess zur Ertragserwirtschaftung ermöglichen. Hierzu zählen unter anderem Treibstoffe und Schmiermittel für sowie Verschleißteile der landwirtschaftlichen Erntemaschinen 11, Werkzeuge oder dergleichen.

Die Prognoseeinheit 3 ermittelt auf Grundlage einer Planungsvorgabe 8 und abhängig von den Erntedaten 4, 5, 6 und den Maschinendaten 7 anhand eines vorgegebenen Prognosemodells 9 eine Ernteprognose. Bei der Planungsvorgabe 8 handelt es sich um eine Vorgabe zumindest eines die Zukunft betreffenden landwirtschaftlichen Aspekts bei der Bearbeitung des zumindest einen Feldes F, insbesondere bezüglich der Sorte der anzubauenden Früchte und/oder bezüglich der landwirtschaftlichen Aktionen betreffend das Feld, beispielsweise eine Aussaat, eine Düngung, eine Verwendung von Pflanzenschutz oder eine Ernte. Die Planungsvorgabe 8 kann hierbei angeben, dass ein oder mehrere landwirtschaftliche Aspekte allgemein realisiert werden sollen, beispielsweise, dass eine bestimmte Frucht anzubauen ist. Die Planungsvorgabe 8 kann ebenso zeitliche Vorgaben für landwirtschaftliche Aspekte enthalten, beispielsweise, dass eine Aussaat und/oder eine Düngung in bestimmten Zeiträumen vorgenommen werden soll bzw. sollen. Die Planungsvorgabe 8 kann ebenso Vorgaben bezüglich der landwirtschaftlichen Ressourcen zur Durchführung der landwirtschaftlichen Aktionen enthalten, beispielsweise welches Saatgut und/oder welcher Wirkstoff verwendet wird bzw. werden. Die Planungsvorgabe 8 kann ebenso vorgeben, dass bestimmte Ressourcen von der Verwendung ausgeschlossen werden, beispielsweise um gesetzliche Anforderungen oder Erfordernisse für die ökologische Landwirtschaft einzuhalten.

Die Ernteprognose wird anhand des vorgegebenen Prognosemodells 9 ermittelt. In einem einfachen Fall kann das Prognosemodell 9 eine Extrapolation anhand vorgegebener mathematischer Funktionen umfassen, welche insbesondere auf Grundlage der historischen Erntedaten 4 und der aktuellen Erntedaten 5 in Kombination mit den Maschinendaten 7 durchgeführt wird. Im Prognosemodell 9 wird der voraussichtliche Bedarf von Maschinenressourcen an Erntemaschinen 11 zur Durchführung der Ernte auf dem zumindest einen Feld F entsprechend der Planungsvorgabe 8 abgebildet. Vorzugsweise umfasst das Prognosemodell 9 mindestens ein Pflanzenwachstumsmodell, welches insbesondere erwartete Feldumgebungsdaten und Feldzustandsdaten berücksichtigt, und/oder mindestens ein Wirkmechanismusmodell der einzusetzenden Ressourcen, d.h. Hilfs- und Betriebsmittel 10 und Erntemaschinen 11.

Das Assistenzsystem 1 benennt auf Basis der in der Datenbank 2 hinterlegten Erntedaten 4, 5, 6 und Maschinendaten 7 Optimierungskriterien. Die Prognoseeinheit 3 ermittelt anhand eines vorgegebenen Optimierungskriteriums eine Maschineneinstellung 12 für eine Erntemaschine 11 und ordnet diese Maschineneinstellung 12 der Erntemaschine 11 zu, welche in den Maschinendaten 7 als verfügbar benannt ist.

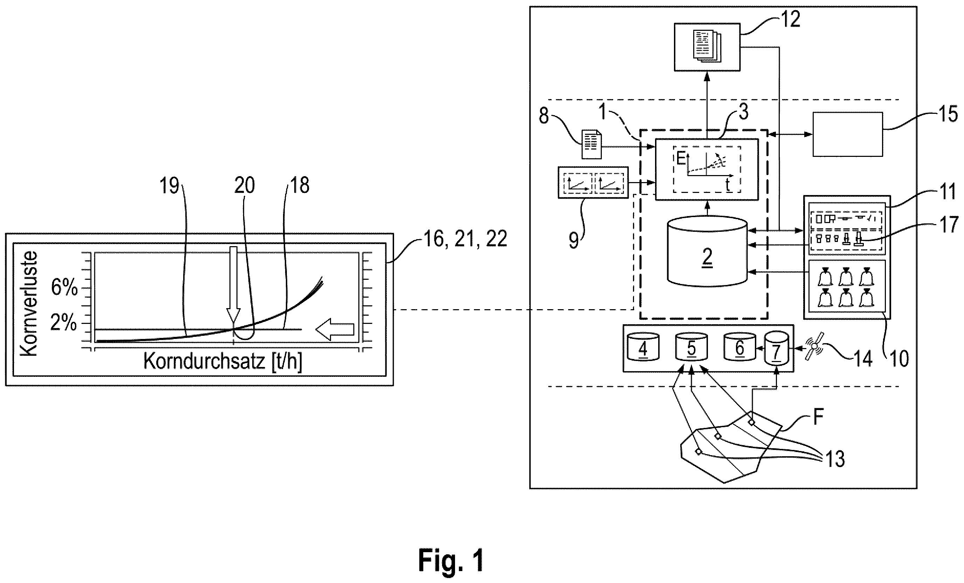

Die Erntedaten 4, 5 werden vorzugsweise von mindestens einer Sensoreinrichtung 13 ermittelt. In Fig. 1 sind hierzu eine Mehrzahl von Sensoreinrichtungen 13 dargestellt, wobei die Sensoreinrichtungen 13 jeweils einem Abschnitt des Feldes F zugeordnet sind. Bei den Sensoreinrichtungen 13 kann es sich um statische Sensoren handeln. Vorzugsweise ist jedoch mindestens eine Sensoreinrichtung 13 einer landwirtschaftlichen Erntemaschine 11 zugeordnet, welcher Erntedaten 4, 5 und/oder Maschinendaten 7 ermittelt.

Das Optimierungskriterium kann insbesondere mehrere Teilkriterien aufweisen, welche im Rahmen der zu erstellenden Maschineneinstellung 12 optimiert werden. Hierbei kann eine Wichtung der Teilkriterien vorgenommen werden. Vorzugsweise handelt es sich bei dem Optimierungskriterium oder zumindest bei einem Teilkriterium des dem Optimierungskriteriums um eine Maximierung, einer Minimierung, ein Einhalten eines Mindestwerts oder ein Einhalten eines Maximalwerts einer Größe, beispielsweise des Ertrags des Feldes F oder einer Wahrscheinlichkeit. Die Prognoseeinheit 3 ermittelt diejenige Erntemaschine 11, welche in den Maschinendaten 7 als verfügbar benannt ist. Die Auswahl der Erntemaschine 11 wird weiter anhand des Optimierungskriteriums vorgenommen. Beispielsweise werden zunächst die als verfügbar benannten Erntemaschinen 11 ausgewählt und hieraus wiederum diejenigen Erntemaschinen 11 selektiert, welche das Optimierungskriterium erfüllen.

Das Assistenzsystem 1 ist zur Eingabe der Planungsvorgabe 8 durch einen Benutzer und/oder zur selbsttätigen Ermittlung der Planungsvorgabe 8 eingerichtet. Die Eingabe der Planungsvorgabe 8 durch den Benutzer kann mittels einer Benutzerschnittstelle 15 erfolgen. Ebenso kann in einer Ausgestaltung die Planungsvorgabe 8 zumindest teilweise selbsttätig von dem Assistenzsystem 1 ermittelt werden, unter anderem auf Grundlage der Erntedaten 4, 5, 6 und der Maschinendaten 7.

Insbesondere bestimmt die Prognoseeinheit 3 zumindest auf der Basis von Erntegutart, Erntemaschinentyp, Qualitätsparametern und Feuchtigkeit eine Bewertungsgrößen-Durchsatz-Funktion, hier und vorzugsweise eine Durchsatz-Verlust-Kennlinie 16. Eine Bewertungsgrößen-Durchsatz-Funktion kann auch eine Durchsatz-Erntequalitätskennlinie sein. Die Durchsatz-Verlust-Kennlinie 16 als Bewertungsgrößen-Durchsatz-Funktion ist ein wesentlicher Gradmesser für den ökonomischen Nutzen der Erntemaschine 11, insbesondere eines Mähdreschers 17. In der Durchsatz-Verlust-Kennlinie 16 bildet eine vorgebbare Verlustgrenze 18 einen limitierenden Faktor für einen vom Mähdrescher 17 erzielbaren Durchsatz 19. Die Verlustgrenze 18 kann vom Bediener vorgegeben werden. Die Verlustgrenze 18 kann auch durch das Assistenzsystem 1 in Abhängigkeit vom vorgegebenen Optimierungskriterium vorgeschlagen oder voreingestellt werden. Im Schnittpunkt 20 des Verlaufs von Verlustgrenze 18 und erzielbarem Durchsatz 19 befindet sich der aktuelle Arbeitspunkt des Mähdreschers 17, welcher die Maschineneinstellung 12 bestimmt.

Auf die Bestimmung der Durchsatz-Verlust-Kennlinie 16 haben, neben der Erntegutart, aus welcher weitere erntegutartspezifische Parameter resultieren, beispielsweise das Korn-Stroh-Verhältnis, der Erntemaschinentyp Einfluss. So können Erntemaschinen einer Gattung unterschiedliche Leistungsmerkmale aufweisen, welche den Durchsatz beeinflussen. Lediglich exemplarisch sei auf die verfügbare Antriebsleistung oder die Arbeitsbreite der Erntemaschine 11, insbesondere des Mähdreschers 17, als mögliche Leistungsmerkmale hingewiesen. Qualitätsparameter können beispielsweise Bruchkornanteil, Sauberkeit des Erntegutes oder die Strohqualität sein. Für den Bruchkornanteil sind die eingestellten Parameter einer Dreschvorrichtung als Maschineneinstellung 12 maßgeblich. Für die Sauberkeit des Erntegutes sind die eingestellten Parameter einer Reinigungsvorrichtung als Maschineneinstellung 12 maßgeblich. Diese Auflistung ist beispielhaft zu verstehen. Erntegutartspezifische Parameter sind unter anderem die Kornfeuchte, die Strohfeuchte, das Korn-Stroh-Verhältnis. Einen zusätzlichen Einfluss auf den Durchsatz sowie die Erntegutverluste kann das Auftreten von Lagergetreide haben.

Die Prognoseeinheit 3 berechnet eine aktuelle Durchsatz-Verlust-Kennlinie 21 und simuliert zumindest eine erwartete Durchsatz-Verlust-Kennlinie 22. Die Simulation der zumindest einen erwarteten Durchsatz-Verlust-Kennlinie 22, stellt in Abhängigkeit vom Zeitpunkt ihrer Bestimmung, vor Erntebeginn oder während eines laufenden Erntevorgangs, eine Entscheidungshilfe dar, mit welcher Maschineneinstellung 12 der Ernteprozess begonnen werden soll. In Abhängigkeit vom Zeitpunkt der Bestimmung einer Durchsatz-Verlust-Kennlinie 16, vor Erntebeginn oder während des Erntevorgangs, kann nur eine Simulation der erwarteten Durchsatz-Verlust-Kennlinie 22 zur Verfügung stehen oder zusätzlich die durch Sensoreinrichtungen 13 an der Erntemaschine 11 bestimmte aktuelle Durchsatz-Verlust-Kennlinie 21, welche den Zeitraum ab dem Erntebeginn abdeckt.

Weiterhin kann die Prognoseeinheit 3 einen mittleren Durchsatz auf der Basis von Logistikdaten, Felddaten, Fahrgeschwindigkeitsdaten der Erntemaschine 12, Daten zur Durchführung von Wartungsarbeiten bestimmen. Unter dem Begriff "mittlerer Durchsatz" ist der erzielte Durchsatz der Erntemaschine 11 über einen definierten Zeitraum zu verstehen, welcher zumindest einen Erntetag bis hin zu einer vollständigen Erntekampagne umfasst, in dem die Erntemaschine 11 auf dem Feld F zum Einsatz kam.

Während die jeweilige Durchsatz-Verlust-Kennlinie 16, 21, 22 den unmittelbaren Einfluss der das Feld F bearbeitenden Erntemaschine 11 auf den erzielbaren Ertrag des Feldbestandes widerspiegelt, berücksichtigt die Prognoseeinheit 3 anhand von Logistikdaten, Felddaten, Daten zur Durchführung von Wartungsarbeiten sowie Fahrgeschwindigkeitsdaten und Betriebsdaten der Erntemaschine 11 den Einfluss auf den mittleren Durchsatz. Dabei werden externe Einflüsse berücksichtigt, die sich nicht unmittelbar aus dem Betrieb der Erntemaschine 11 ergeben müssen, diesen jedoch ebenso beeinflussen wie die Fahrgeschwindigkeitsdaten der Erntemaschine 11 und die Betriebsdaten der Erntemaschine 11.

Zu den externen Einflüssen zählen die Logistikdaten, die neben Anfahrt und Abfahrt der Erntemaschine 11 zum und vom zu bearbeitenden Feld F auch eine Abfahrlogistik, beispielsweise durch Transportwagen oder Unterstützungsfahrzeuge mit Hilfsstoffen und/oder Betriebsstoffen, umfassen. Ein weiterer externer Einfluss ist die Durchführung von Wartungsarbeiten an der Erntemaschine 11 während der Erntezeit, welcher aus der Verfügbarkeit von Ersatzteilen und/oder Wartungspersonal resultiert.

Felddaten berücksichtigen neben der Befahrbarkeit des Feldbodens, beispielsweise aufgrund von Witterungseinflüssen, die Länge von Anfahrtswegen zum Feld F, die geografische Lage des Feldes F oder dergleichen. Weiter können Felddaten das Auftreten von Lagergetreide, die Strohzähigkeit, die Bestandhöhe oder die Bestanddichte betreffen. Betriebsdaten der Erntemaschine 11 betreffen insbesondere Einstellungen von Arbeitsaggregaten der Erntemaschine 11, welche sich unmittelbar auf den Durchsatz als auch die Verluste an verarbeitetem Erntegut auswirken. Beispielsweise beeinflusst bei der als Mähdrescher 17 ausgeführten Erntemaschine 11 die Höheneinstellung des Vorsatzgerätes die Menge an aufgenommenen Erntegut. Je geringer die verbleibende Stoppelhöhe auf dem Feld F, desto mehr Erntegut in Form von Korn und Nichtkornbestandteilen, muss von dem Mähdrescher 17 verarbeitet werden, was wiederum die Auslastung des Antriebsmotors des Mähdreschers 17 beeinflusst. Die Situation des Auftretens von Lagergetreide führt unter anderem zu einer signifikanten Reduzierung der Fahrgeschwindigkeit und damit des Durchsatzes. Zudem werden in der Regel für die Dauer der Bearbeitung von Lagergetreide weitere Einstellungen von Arbeitsaggregaten des Mähdreschers 17 angepasst, um Verluste bei der Aufnahme des Erntegutes durch das Vorsatzgerät gering zu halten.

Dabei kann die Prognoseeinheit 3 einen mittleren Durchsatz berechnen und einen erwarteten mittleren Durchsatz simulieren. Hierbei wird der mittlere Durchsatz anhand historischer, d.h. in der Vergangenheit liegender, Daten berechnet. Historische Daten sind entsprechend bereits Daten vom Vortag bzw. einer vorangegangenen Ernteperiode, wenn diese dasselbe Feld F und dieselbe Erntemaschine 11 betreffen.

Das Assistenzsystem 1 ist zur Visualisierung von durch die Prognoseeinheit 3 und/oder dem Assistenzsystem 1 bestimmten Parametern eingerichtet. Hierzu kann die Benutzerschnittstelle 15 des Assistenzsystems 1 dienen, welche zur Visualisierung vorgesehene Daten an den bevorzugt als mobiles Datenverarbeitungsgerät ausgeführten Client übermittelt. Als mobiles Datenverarbeitungsgerät kommen dabei insbesondere ein Smartphone oder ein Tablet-PC in Betracht. Eine zur Kommunikation mit der Benutzerschnittstelle 15 geeignete Schnittstellesoftware kann als sogenannten App bereitgestellt werden.

Dabei kann das Assistenzsystem 1 als Parameter einen Status und/oder einen Fortschritt einer Erntekampagne visualisieren. Im Zuge dessen können wesentliche Parameter zur Beurteilung der Erntesituation visualisiert werden.

Ein weiterer Aspekt ist, dass das Assistenzsystem 1 als Parameter aus dem Erntekampagnenstatus eine Folgeplanung, insbesondere eine Tagesplanung, ableitet und visualisiert. Das Assistenzsystem 1 berücksichtigt bei der Erstellung einer Folgeplanung unter anderem die Erntedaten 4, 5, 6 und die Maschinendaten 7 ebenso wie die von der Prognoseeinheit 3 bestimmten Durchsatz-Verlust-Kennlinien 16, 21, 22 sowie den berechneten und den erwarteten mittleren Durchsatz.

Weiterhin kann das Assistenzsystem 1 als Parameter die aktuelle Durchsatz-Verlust-Kennlinie 21 und die erwartete Durchsatz-Verlust-Kennlinie 22 und/oder den mittleren Durchsatz und den erwarteten mittleren Durchsatz visualisieren. Diese Visualisierung dient der Unterstützung bei der Beurteilung einer aktuellen Betriebssituation durch den Benutzer 24 des Assistenzsystems 1.

Die die Prognoseeinheit 3 ist dazu eingerichtet, anhand der Erntedaten 4, 5, 6 und der Maschinendaten 7 Einzelwerte zu prognostizieren und zu visualisieren. Prognostizierte Einzelwerte können Kornfeuchte, Abreife, Ertrag, Bodenbeschaffenheit, Erntezeitbedarf, Wetterdaten, Hilfsmittel- und Betriebsmittelaufwendungen und dergleichen mehr sein.

Des Weiteren kann die Prognoseeinheit 3 den dem Erntekampagnenverlauf und die damit verbundenen Erntekosten modellieren. In diese Modellierung können unterschiedliche Optionen einfließen, die vor dem Hintergrund des jeweils zu erwartenden Erntekampagnen- und Erntekostenverlaufs bewertet werden.

Ein wesentlicher Aspekt besteht darin, dass das Assistenzsystem 1 unter Berücksichtigung der durch die Prognoseeinheit 3 erstellten Ernteprognose interaktiv Handlungsempfehlungen generiert und dem Benutzer 24 zur Auswahl und Entscheidung vorgibt. Im Speziellen betrifft dies das Ermitteln der Maschineneinstellung 12 für eine Erntemaschine 11 und der Zuordnung zu einer Erntemaschine 11, welche in den Maschinendaten 7 als verfügbar benannt ist.

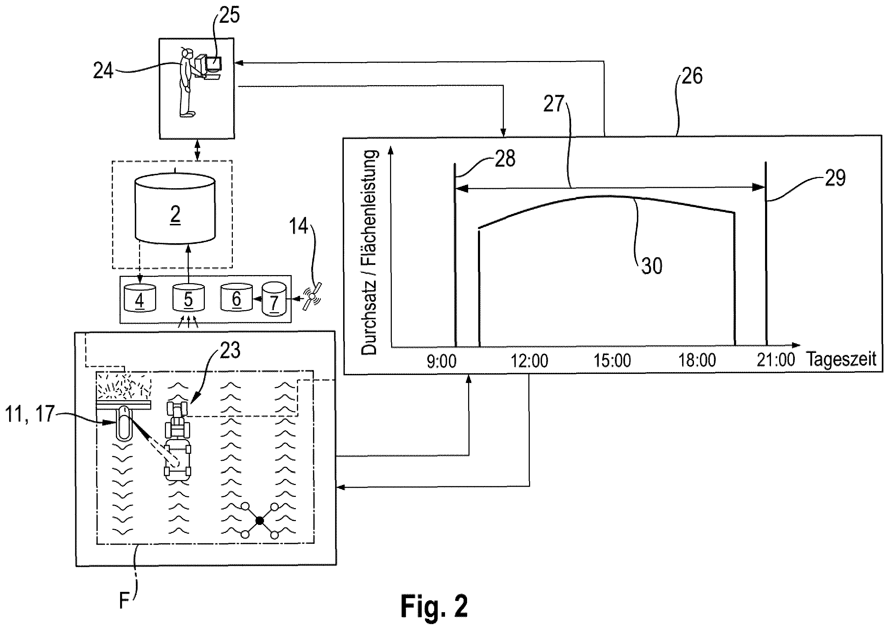

Dies wird exemplarisch anhand von Fig. 2 erläutert, welche eine schematische Darstellung einer von dem Assistenzsystem 1 prognostizierten, als Diagramm dargestellten, Tagesplanung 26 zeigt. Auf dem Feld F befindet sich die Erntemaschine 11, welche in den Maschinendaten 7 als verfügbar benannt ist. Ein Transportfahrzeug 23 dient dem Abfahren des von der Erntemaschine 11 verarbeiteten Erntegutes. Einem Benutzer 24 des Assistenzsystems 1 wird mittels eines Datenverarbeitungsgerätes 25 die prognostizierte Tagesplanung 26 dargestellt, welche aus der Planungsvorgabe 8 resultiert, die der Benutzer 24 vorgegeben hat. In dem Diagramm ist der Durchsatz bzw. die Flächenleistung über der Zeit aufgetragen. Im Fall einer Getreideernte durch den Mähdrescher 17 bestimmt sich ein Erntefenster 27 durch die Feuchtigkeit des zu erntenden Korns am Anfang des Tages sowie die Luftfeuchtigkeit am Ende des Tages. Zwischen einem Erntebeginn 28 und einem Ernteende 29 wird durch die Prognoseeinheit 3 ein Verlauf 30 für einen erwarteten mittleren Durchsatz bestimmt. Dem Verlauf liegt als Planungsvorgabe 8 eine Flächenleistung zugrunde

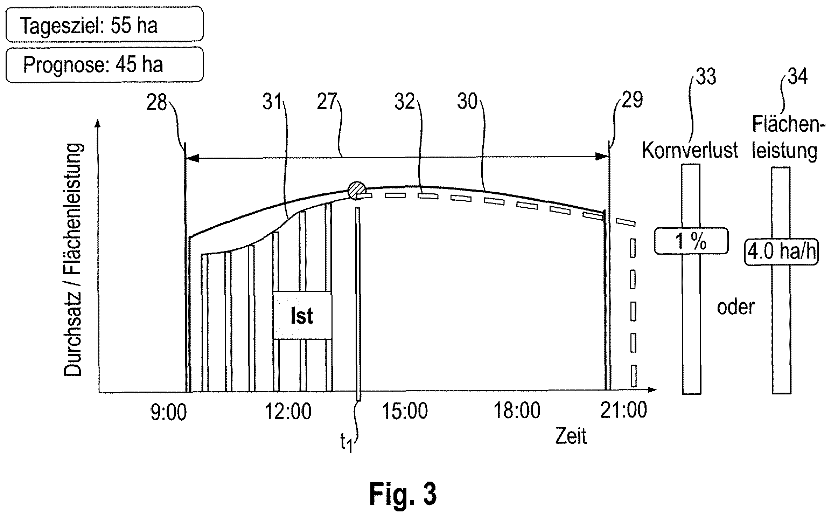

In Fig. 3 ist das Diagramm der prognostizierten Tagesplanung 26 gemäß Fig. 2 dargestellt. Die Planungsvorgabe 8 durch den Benutzer 24 sieht als Tagesziel beispielhaft eine zu bearbeitende Fläche von 55 ha vor. Die Prognoseeinheit 3 prognostiziert anhand der Erntedaten 4, 5, 6 und Maschinendaten 7 eine bearbeitbare Fläche von 45 ha.

Zusätzlich zum Verlauf 30 des erwarteten mittleren Durchsatzes ist ein weiterer Verlauf 31 dargestellt, welcher einen aktuellen mittleren Durchsatz vom Erntebeginn 28 bis zu einem Zeitpunkt t₁ innerhalb des Erntefensters 27 wiedergibt. Der Verlauf 31 basiert dabei auf den aktuellen Erntedaten 5, welche während des Erntevorgangs durch die Auswertung von Daten der Sensoreinrichtungen 13 bestimmt werden. Aus der Abweichung der Verläufe 30 und 31 bestimmt die Prognoseeinheit 3, ausgehend vom Zeitpunkt t₁, einen angepassten - strichliniert dargestellten - Verlauf 32 des erwarteten mittleren Durchsatzes, welcher auf der bestehenden Maschineneinstellung 12 basiert. Unmittelbare Stellgrößen zur Beeinflussung der Erreichung des Tageszieles sind die Einstellwerte für Kornverlust 33 und Flächenleistung 34, welche sich bekanntermaßen gegenseitig beeinflussen.

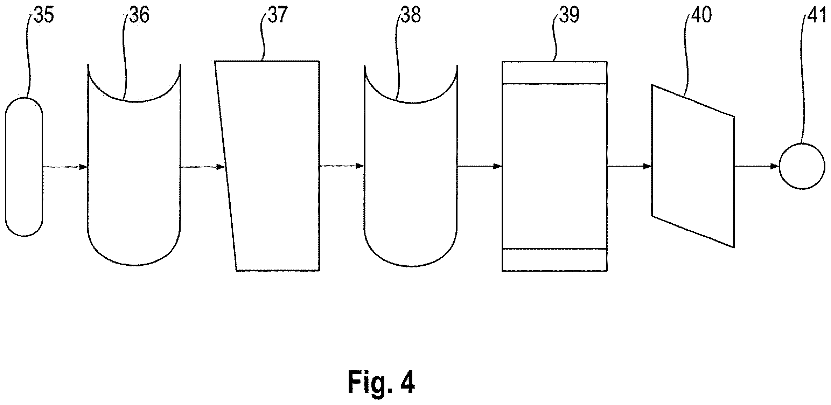

In Fig. 4 ist ein Flussdiagramm dargestellt, welches einen Ablauf zur Berechnung von Beginn und Ende eines Druschprozesses durch das Assistenzsystem 1 zeigt. Im Schritt 35 startet der Algorithmus zur Berechnung von Beginn und Ende eines von der Erntemaschine 11 durchzuführenden Druschprozesses.

Im Schritt 36 werden historische und aktuelle Erntedaten 4, 5 und Maschinendaten 7, die für das Feld F spezifisch sind, aus der Datenbank 2 abgefragt. Dazu gehören als Erntedaten 4, 5 die Erntefruchtart, die Schlaggröße, der mittlere Durchsatz sowie die Feldeffizienz. Die Prognoseeinheit 3 erstellt eine Ertragsprognose. Eine Kornverlustgrenze ergibt sich aus der Planungsvorgabe 8. Als Maschinendaten 7 werden unter anderem spezifische Daten der Erntemaschine 11 abgerufen. Stehen diese Daten nicht oder nur teilweise zur Verfügung, werden diese durch das Assistenzsystem 1 interaktiv vom Benutzer 24 abgefragt.

Im Schritt 37 werden durch das Assistenzsystem 1 interaktiv aktuelle Erntedaten 5, Maschinendaten 7 sowie Daten zur Planungsvorgabe 8 vom Benutzer 24 abgefragt und/oder vorgeschlagen. So kann das Assistenzsystem 1 dem Benutzer 24 eine Kornverlustgrenze vorschlagen, welche von der Prognoseeinheit 3 bestimmt wurde. Diese kann der Benutzer 24 bestätigen oder modifizieren. Weitere abzufragende Parameter können eine Grenzkornfeuchte, welche den maximal zulässigen Feuchtegehalt des Erntegutes bestimmt, eine Grenzluftfeuchte, deren Erreichen den Zeitpunkt bestimmt, bis zu welchem abgeerntet werden soll, sowie eine Trocknungsfeuchte sein, ab welcher eine Einlagerung des Erntegutes möglich ist. Weitere Abfragen im Schritt 37 betreffen den organisatorisch bedingten frühesten Zeitpunkt für den Druschbeginn und den organisatorisch bedingten spätesten Zeitpunkt für das Druschende.

Im Schritt 38 werden durch das Assistenzsystem 1 von einem externen System 14 beispielsweise Wetterdaten abgerufen, um mittels der Prognoseeinheit 3 den Zeitpunkt zu bestimmen, zu dem die erwartete Kornfeuchte den Wert der Grenzkornfeuchte unterschreitet. Daraus leitet die Prognoseeinheit 3 einen erwarteten Druschbeginn für die Erntemaschine 11 ab. Entsprechend wird mittels der Prognoseeinheit 3 der Zeitpunkt bestimmt, zu dem die erwartete Kornfeuchte den Wert der Grenzkornfeuchte am Ende des Erntetages voraussichtlich überschreitet. Daraus leitet die Prognoseeinheit 3 ein erwartetes Druschende für die Erntemaschine 11 ab.

Im Schritt 39 werden der im Schritt 38 bestimmte erwartete Druschbeginn und der im Schritt 37 ermittelte organisatorisch bedingte früheste Zeitpunkt für den Druschbeginn miteinander verglichen, um den tatsächlich möglichen Zeitpunkt für den Druschbeginn festzulegen. Analog wird der tatsächlich mögliche Zeitpunkt für das Druschende festgelegt. Zusätzlich können im Schritt 39 interaktiv ergänzende Abfragen an den Benutzer 24 gerichtet werden, die Abfahrlogistik und Feldeffizienz betreffen.

Im Schritt 40 berechnet die Prognoseeinheit 3 unter anderem eine erwartete Druschdauer für das Abernten des Feldes F, den erwarteten mittleren Durchsatz, die dafür erforderliche Druschzeit durch die Erntemaschine 11 sowie einen erforderlichen von der erwarteten Druschdauer, dem erwarteten mittleren Durchsatz und der erforderlichen Druschdauer abhängigen erforderlichen Durchsatz. Weiterhin wird ein Durchsatzfaktor bestimmt, welcher das Verhältnis von erforderlichem Durchsatz und erwartetem mittlerem Durchsatz wiedergibt. Dieser Durchsatzfaktor wird zur Bestimmung eines Verlustkornfaktors herangezogen. Des Weiteren wird eine etwaige verbleibende Restfläche am Ende der erwarteten Druschdauer ermittelt, welche sich aus der Differenz von Schlaggröße des Feldes F und der erwarteten Druschdauer und des erwarteten mittleren Durchsatzes bestimmt. Entsprechend bestimmt sich eine Druschzeitdifferenz aus der erwarteten Druschdauer und der erforderlichen Druschzeit.

Mit diesen Daten wird im Schritt 41 durch die Prognoseeinheit 3 anhand des vorgegebenen Optimierungskriteriums eine Maschineneinstellung 12 für die Erntemaschine 11 ermittelt und der Erntemaschine 11 zugeordnet, welche in den Maschinendaten 7 als verfügbar benannt ist.

**Bezugszeichenliste**

| | | | |
|---|---|---|---|
| 1 | Assistenzsystem | 34 | Flächenleistung |
| 2 | Datenbank | 35 | Schritt |
| 3 | Prognoseeinheit | 36 | Schritt |
| 4 | Historische Erntedaten | 37 | Schritt |
| 5 | Aktuelle Erntedaten | 38 | Schritt |
| 6 | Erwartete Erntedaten | 39 | Schritt |
| 7 | Maschinendaten | 40 | Schritt |
| 8 | Planungsvorgabe | 41 | Schritt |
| 9 | Prognosemodell | | |
| 10 | Hilfs- und Betriebsmittel | | |
| 11 | Erntemaschine | | |
| 12 | Maschineneinstellung | | |
| 13 | Sensoreinrichtung | | |
| 14 | Externes System | | |
| 15 | Benutzerschnittstelle | | |
| 16 | Durchsatz-Verlust-Kennlinie | | |
| 17 | Mähdrescher | | |
| 18 | Verlustgrenze | | |
| 19 | Erzielbarer Durchsatz | | |
| 20 | Schnittpunkt | | |
| 21 | Aktuelle Durchsatz-Verlust-Kennlinie | | |
| 22 | Erwartete Durchsatz-Verlust-Kennlinie | | |
| 23 | Transportfahrzeug | | |
| 24 | Benutzer | | |
| 25 | Datenverarbeitungsgerät | | |
| 26 | Tagesplanung | | |
| 27 | Erntefenster | | |
| 28 | Erntebeginn | | |
| 29 | Ernteende | | |
| 30 | Verlauf erwarteter mittlerer Durchsatz | | |
| 31 | Verlauf aktueller mittlerer Durchsatz | | |
| 32 | Angepasster Verlauf von 30 | | |
| 33 | Kornverlust | | |

## Patentansprüche

1. Assistenzsystem (1) zur Ernteunterstützung einer Bearbeitung zumindest eines landwirtschaftlichen Feldes (F), wobei das Assistenzsystem (1) eine Datenbank (2) und eine Prognoseeinheit (3) aufweist, wobei die Datenbank (2) sowohl historische Erntedaten (4), aktuelle Erntedaten (5) und erwartete Erntedaten (6) des zumindest einen landwirtschaftlichen Feldes (F) als auch Maschinendaten (7) wenigstens einer Erntemaschine (11, 17) umfasst, wobei die Prognoseeinheit (3) auf Grundlage einer Planungsvorgabe (8) und in abhängig von den in der Datenbank (2) hinterlegten Erntedaten (4, 5, 6) und Maschinendaten (7) anhand eines Prognosemodells (9) eine Ernteprognose erstellt, welche den voraussichtlichen Bedarf von Maschinenressourcen zur Durchführung der Ernte auf dem zumindest einen Feld (F) entsprechend der Planungsvorgabe (8) abbildet, **dadurch gekennzeichnet, dass** das Assistenzsystem (1) auf Basis der in der Datenbank (2) hinterlegten Erntedaten (4, 5, 6) und Maschinendaten (7) Optimierungskriterien benennt, und dass die Prognoseeinheit (3) anhand eines vorgegebenen Optimierungskriteriums eine Maschineneinstellung (12) für eine Erntemaschine (11, 17) ermittelt und einer Erntemaschine (11, 17) zuordnet, welche in den Maschinendaten (7) als verfügbar benannt ist.

2. Assistenzsystem (1) nach Anspruch 1, **dadurch gekennzeichnet, dass** das Assistenzsystem (1) zur Eingabe der Planungsvorgabe (8) durch einen Benutzer (24) und/oder zur selbsttätigen Ermittlung der Planungsvorgabe (8) eingerichtet ist.

3. Assistenzsystem (1) nach Anspruch 1 oder 2, **dadurch gekennzeichnet, dass** die Ernteprognose eine Ertragsprognose eines Feldbestandes des zumindest einen Feldes (F) basierend auf den Erntedaten (4, 5, 6) umfasst und das Optimierungskriterium die Erragsprognose betrifft.

4. Assistenzsystem (1) nach einem der vorhergehenden Ansprüche, **dadurch gekennzeichnet, dass** die Prognoseeinheit (3) zumindest auf der Basis von Erntegutart, Erntemaschinentyp, Qualitätsparametern und Feuchtigkeit eine Bewertungsgrößen-Durchsatz-Funktion bestimmt.

5. Assistenzsystem (1) nach Anspruch 4, **dadurch gekennzeichnet, dass** die Prognoseeinheit (3) eine aktuelle Bewertungsgrößen-Durchsatz-Funktion berechnet und zumindest eine erwartete Bewertungsgrößen-Durchsatz-Funktion simuliert.

6. Assistenzsystem (1) nach einem der vorhergehenden Ansprüche, **dadurch gekennzeichnet, dass** die Prognoseeinheit (3) einen mittleren Durchsatz der Erntemaschine (11, 17) auf der Basis von Logistikdaten, Felddaten, Fahrgeschwindigkeitsdaten und Betriebsdaten der Erntemaschine (11, 17) sowie Daten zur Durchführung von Wartungsarbeiten bestimmt.

7. Assistenzsystem (1) nach Anspruch 6, **dadurch gekennzeichnet, dass** die Prognoseeinheit (3) einen mittleren Durchsatz berechnet und einen erwarteten mittleren Durchsatz simuliert.

8. Assistenzsystem (1) nach einem der vorhergehenden Ansprüche, **dadurch gekennzeichnet, dass** das Assistenzsystem (1) zur Visualisierung von durch die Prognoseeinheit (3) und/oder dem Assistenzsystem (1) bestimmten Parametern eingerichtet ist.

9. Assistenzsystem (1) nach Anspruch 8, **dadurch gekennzeichnet, dass** das Assistenzsystem (1) als Parameter einen Status und/oder einen Fortschritt einer Erntekampagne visualisiert.

10. Assistenzsystem (1) nach Anspruch 9, **dadurch gekennzeichnet, dass** das Assistenzsystem (1) als Parameter dem Status und/oder dem Fortschritt einer Erntekampagne eine Folgeplanung, insbesondere eine Tagesplanung, ableitet und visualisiert.

11. Assistenzsystem (1) nach einem der Ansprüche 8 bis 10, **dadurch gekennzeichnet, dass** das Assistenzsystem (1) als Parameter die aktuelle Durchsatz-Verlust-Kennlinie (21) und die erwartete Durchsatz-Verlust-Kennlinie (22) und/oder einen Verlauf (31) des mittleren Durchsatzes und einen Verlauf des erwarteten mittleren Durchsatzes (30, 32) visualisiert.

12. Assistenzsystem (1) nach einem der vorhergehenden Ansprüche, **dadurch gekennzeichnet, dass** die Prognoseeinheit (3) anhand der Erntedaten (4, 5, 6) und Maschinendaten (7) Einzelwerte prognostiziert und visualisiert.

13. Assistenzsystem (1) nach einem der vorhergehenden Ansprüche, **dadurch gekennzeichnet, dass** das Assistenzsystem (1) unter Berücksichtigung der durch die Prognoseeinheit (3) erstellten Ernteprognose interaktiv Handlungsempfehlungen generiert.

14. Assistenzsystem (1) nach einem der vorhergehenden Ansprüche, **dadurch gekennzeichnet, dass** historische Erntedaten (4), aktuelle Erntedaten (5) sowie Maschinendaten (7) durch Sensoreinrichtungen (13) zumindest einer Erntemaschine (11, 17) und/oder von externen Datenquellen (14) ermittelt und/oder bereitgestellt werden.

15. Verfahren zur Ernteunterstützung einer Bearbeitung zumindest eines landwirtschaftlichen Feldes (F) mittels eines Assistenzsystems (1), wobei das Assistenzsystem (1) eine Datenbank (2) und eine Prognoseeinheit (3) aufweist, wobei die Datenbank (2) sowohl historische Erntedaten (4), aktuelle Erntedaten (5) und erwartete Erntedaten (6) des zumindest einen landwirtschaftlichen Feldes (F) als auch Maschinendaten (7) wenigstens einer Erntemaschine (11) umfasst, wobei mittels der Prognoseeinheit (3) auf Grundlage einer Planungsvorgabe (8) und in abhängig von den in der Datenbank (2) hinterlegten Erntedaten (4, 5, 6) und Maschinendaten (7) anhand eines Prognosemodells (9) eine Ernteprognose erstellt wird, durch welche der voraussichtliche Bedarf von Maschinenressourcen zur Durchführung der Ernte auf dem zumindest einen Feld (F) entsprechend der Planungsvorgabe (8) abgebildet wird, **dadurch gekennzeichnet, dass** auf Basis der in der Datenbank (2) hinterlegten Erntedaten (4, 5, ,6) und Maschinendaten (7) Optimierungskriterien durch das Assistenzsystem (1) benannt werden, und dass mittels der Prognoseeinheit (3) anhand eines vorgegebenen Optimierungskriteriums eine Maschineneinstellung (12) für eine Erntemaschine (11, 17) ermittelt und einer Erntemaschine (11, 17) zugeordnet wird, welche in den Maschinendaten (7) als verfügbar benannt ist.
